# EUROPEAN PATENT APPLICATION

(11) **EP 4 794 109 A2**
(43) Date of publication of application: **19.08.2026**
(21) Application number: 26188761.6
(22) Date of filing: 24.07.2023
(51) Int. Cl.: H01M 50/569

(54) **IMMERSION-COOLED BATTERY MODULE, AND BATTERY PACK AND VEHICLE INCLUDING SAME**

(30) Priority: 28.10.2022 KR 20220141140
(62) Document number(s) of the earlier application(s) in accordance with Art. 76 EPC: 23861713.8 / 4 391 159
(71) Applicant: LG Energy Solution, Ltd., Seoul 07335 (KR)
(72) Inventor: LEE, Jung-Hoon, 34122 DAEJEON (KR); UM, Tae-Ki, 34122 DAEJEON (KR); KIM, Doo-Seung, 34122 DAEJEON (KR); RYU, Jae-Uk, 34122 DAEJEON (KR)
(74) Representative: Plasseraud IP

(57) **Abstract**

An immersion cooled battery module according to an embodiment of the present disclosure includes a plurality of sub battery modules; a module case having an opening in at least one end, and accommodating the plurality of sub battery modules and a cooling liquid in an internal space connected to the opening; a sealing cover air-tightly covering the opening; a plurality of circuit boards corresponding to the plurality of sub battery modules, received in the internal space and configured to sense electrical signals related to the plurality of sub battery modules; and a waterproof connector coupled to the sealing cover, and configured to transmit the electrical signals respectively sensed by the plurality of circuit boards to an external device outside of the module case.

## Description

### TECHNICAL FIELD

The present application claims priority to Korean Patent Application No. 10-2022-0141140 filed on October 28, 2022 in the Republic of Korea, the disclosure of which is incorporated herein by reference.

The present disclosure relates to an immersion cooled battery module and a battery pack and a vehicle including the same, and more particularly, to an immersion cooled battery module for cooling rechargeable battery cells by direct contact between the battery cells and a cooling liquid and a battery pack and a vehicle including the same.

### BACKGROUND ART

In general, a secondary battery refers to a battery that can be recharged repeatedly and may include, for example, lithium ion batteries, lithium polymer batteries, nickel cadmium batteries, nickel hydrogen batteries, nickel zinc batteries and so on. The most basic secondary battery, a battery cell, may supply the output voltage of about 2.5V to 4.2V.

Recently, as secondary batteries are used in devices or systems requiring high output voltage and high charge capacity such as electric vehicles or Energy Storage Systems (ESS), a battery module including battery cells densely arranged in the limited space and connected either in series or in parallel or both, or a battery pack including battery modules densely arranged and connected either in series or in parallel or both is being widely used. For the battery module or the battery pack including the plurality of battery cells densely arranged in the limited space to operate normally, it is necessary to properly maintain the temperature of the battery cells.

However, as disclosed in Korean Patent Publication No. 10-2019-0053574, the conventional technology cools battery cells using a heat sink that only contacts the bottom edge of the battery cells. Accordingly, the conventional technology has low battery cell cooling performance and is difficult to prevent thermal runaway in the battery cell. Additionally, the conventional technology fails to control fires that occur in the event of thermal runaway in the battery cell, it is difficult to prevent thermal runaway propagation to other battery cell or other battery module near the battery cell in which the thermal runaway occurred.

Additionally, as disclosed in Korean Patent Publication No. 10-2021-0048855, the conventional technology cools battery cells embedded in a battery module using an insulating oil, wherein each case 200, 300 accommodating a battery cell stack 100 is provided for each battery cell stack, and the insulating oil is supplied and discharged through independent pipes 500, 600, 700 for each case 200, 300. Accordingly, since the conventional technology needs a large space to install the insulating oil pipes, there are increases in the manufacturing cost of the battery pack including the corresponding battery module and the total volume and weight of the battery pack, resulting in low energy density.

### SUMMARY

### Technical Problem

The present disclosure is directed to providing an immersion cooled battery module with improved cooling performance for preventing thermal runaway in a battery cell included in the battery module or thermal runaway propagation and a battery pack and a vehicle including the same.

The present disclosure is further directed to providing an immersion cooled battery module with improved energy density by minimizing the increases in volume and weight occupied by the battery module and a battery pack and a vehicle including the same.

### Technical Solution

An immersion cooled battery module according to an aspect of the present disclosure is a battery module for cooling battery cells by direct contact between the battery cells and a cooling liquid, and includes a plurality of sub battery modules, each sub battery module including a battery cell stack in which a plurality of battery cells are stacked; a module case having an opening in at least one end, and accommodating the plurality of sub battery modules and the cooling liquid in an internal space connected to the opening; a sealing cover air-tightly covering the opening; a plurality of circuit boards corresponding to the plurality of sub battery modules, received in the internal space and configured to sense electrical signals related to the plurality of sub battery modules; and a waterproof connector coupled to the sealing cover, and configured to transmit the electrical signals respectively sensed by the plurality of circuit boards to an external device outside of the module case.

In an embodiment, the plurality of circuit boards may include a first circuit board configured to sense a first electrical signal related to a first sub battery module among the plurality of sub battery modules; and a second circuit board configured to sense a second electrical signal related to a second sub battery module among the plurality of sub battery modules, and the first circuit board may be configured to transmit the first electrical signal and the second electrical signal transmitted from the second circuit board to the external device through the waterproof connector.

In an embodiment, the immersion cooled battery module may further include a Flat Flexible Cable (FFC) electrically connecting the first circuit board to the second circuit board to transmit the second electrical signal sensed by the second circuit board to the first circuit board.

In an embodiment, each of the plurality of circuit boards may include a Flexible Printed Circuit Board (FPCB).

In an embodiment, the sealing cover may further have a through-hole into which at least a portion of the waterproof connector is inserted, and the waterproof connector may include a connector body coupled to a second surface of the sealing cover and covering a first opening of the through-hole formed in the second surface, wherein a first surface of the sealing cover is adjacent to the internal space and the second surface is disposed opposite the first surface; at least one contact pin supported by the connector body and extending in a direction facing away from the internal space of the module case; and at least one connection pin electrically connected to the at least one contact pin, extending from the connector body to the internal space through the through-hole, and electrically connected to a first circuit board among the plurality of circuit boards.

In an embodiment, the waterproof connector may further include a sealing member disposed between the connector body and the second surface of the sealing cover to seal around the first opening of the through-hole.

In an embodiment, the immersion cooled battery module may further include a connection circuit board coupled to the first surface of the sealing cover to cover a second opening of the through-hole formed in the first surface, and electrically connected to the at least one connection pin; and a cable having an end electrically connected to the connection circuit board and an opposite end electrically connected to the first circuit board.

In an embodiment, the immersion cooled battery module may further include an insulation block made of an insulating material, disposed between a first sub battery module and a second sub battery module adjacent to each other among the plurality of sub battery modules and having an end in close contact with the first sub battery module and an opposite end in close contact with the second sub battery module.

In an embodiment, the insulation block may have a communication groove at an edge of the insulation block in close contact with an inner surface of the module case, the communication groove allowing the cooling liquid to pass from the first sub battery module to the second sub battery module.

In an embodiment, the communication groove may extend from the first sub battery module to the second sub battery module, and become narrower toward the second sub battery module to increase a flow rate of the cooling liquid passing through the communication groove.

In an embodiment, the immersion cooled battery module may further include a connection member electrically connecting the first sub battery module to the second sub battery module, and the insulation block may have a support groove where at least a portion of the connection member is inserted and supported.

In an embodiment, the cooling liquid may include an insulating oil or a dielectric liquid.

A battery pack according to another aspect of the present disclosure may include the immersion cooled battery module according to any one of the above-described embodiments.

A vehicle according to still another aspect of the present disclosure may include the immersion cooled battery module according to any one of the above-described embodiments.

### Advantageous Effects

According to the present disclosure, since the battery cells received in the module case of the battery module are cooled through the direct contact between the battery cells and the cooling liquid fed into the module case, it may be possible to eliminate the need for battery cell cooling means such as a thermal pad and a heat sink, as well as improving the battery cell cooling performance and effectively preventing thermal runaway in the battery cell. Additionally, when a fire occurs due to thermal runaway in the battery cell, the cooling liquid filled in the module case may act as a fire extinguishing agent, so it may be possible to prevent thermal runaway propagation to other battery cell or other battery module near the battery cell in which the thermal runaway occurred.

Additionally, since the plurality of sub battery modules each including the battery cell stack in which a plurality of battery cells are stacked is received in the single module case to form a battery module, it may be possible to reduce the number of battery modules in the battery pack. As a result, in the battery pack including the plurality of battery modules, it may be possible to reduce the space occupied by the inlet and the outlet for each battery module and the space occupied by the pipes required to supply the cooling liquid to each battery module and recover the cooling liquid from each battery module, thereby reducing the manufacturing cost of the battery pack, reducing the total volume and weight of the battery pack and improving the energy density of the battery pack.

Additionally, since one of the plurality of circuit boards corresponding to the plurality of sub battery modules transmits the electrical signal sensed by itself and the electrical signal sensed by the remaining circuit board to the external device through one waterproof connector, it may be possible to make it easy to establish an electrical connection between the battery module and the external electrical device, simplify the wiring structure of the battery pack including the plurality of battery modules, and monitor the condition of the battery module for each sub battery module.

Additionally, since the waterproof connector is coupled to the sealing cover having the inlet or the outlet and disposed in the space for connecting the inlet or the outlet to the pipe, it may be possible to eliminate the need for a space for performing the electrical connection operation of the waterproof connector in the battery pack, and make it easy to perform the electrical connect operation of the waterproof connector.

Additionally, since the insulation module disposed between the first sub battery module and the second sub battery module adjacent to each other among the plurality of sub battery modules supports in close contact with each of the first and second sub battery modules, it may be possible to ensure electrical safety of the sub battery modules and prevent damage to the sub battery module caused by physical impacts or vibration.

Additionally, since the edge of the insulation block in close contact with the inner surface of the module case has the communication groove through which the cooling liquid passes, it may be possible to achieve the smooth flow of cooling liquid, thereby further improving the cooling performance of the battery module.

Additionally, since the inner edge of the first end cover is inserted into the first insertion groove between the wall portion of the first sealing cover and the open edge of the module case, and the open edge of the module case is inserted into the second insertion groove between the inner edge and the outer edge of the first end cover to form a meander-shaped sealing structure, it may be possible to minimize the leakage risk of the cooling liquid fed into the battery module.

Additionally, the sealing tape, the liquid sealant and the structured adhesive applied to the sealing structure of the battery module may achieve triple prevention of cooling liquid leaks, thereby improving durability and safety of the immersion cooled battery module.

Further, those having ordinary skill in the technical field pertaining to the present disclosure will easily understand that various embodiments of the present disclosure will solve these and other technical problems from the following description.

### BRIEF DESCRIPTION OF THE DRAWINGS

FIG. 1 is a perspective view of an immersion cooled battery module according to an embodiment of the present disclosure.
FIG. 2 is an exploded perspective view of the immersion cooled battery module shown in FIG. 1.
FIG. 3 is an exploded perspective view of a battery assembly received in a module case of an immersion cooled battery module according to an embodiment of the present disclosure.
FIG. 4 is an enlarged view of an insulation block of the battery assembly shown in FIG. 3.
FIG. 5 is a vertical cross-sectional view of section A1 in FIG. 4.
FIG. 6 is a perspective view of a first sealing cover of an immersion cooled battery module according to an embodiment of the present disclosure.
FIG. 7 is a vertical cross-sectional view of a first sealing cover coupled to a module case.
FIG. 8 is a perspective view of a first end cover of an immersion cooled battery module according to an embodiment of the present disclosure.
FIG. 9 is a vertical cross-sectional view of the first end cover shown in FIG. 8, taken along the line S-S´.
FIG. 10 is a vertical cross-sectional view of a first end cover coupled to a module case.
FIG. 11 is an enlarged view of section A2 in FIG. 10.
FIG. 12 is a diagram showing a battery pack according to an embodiment of the present disclosure.
FIG. 13 is a diagram showing a vehicle according to an embodiment of the present disclosure.

### DETAILED DESCRIPTION

Hereinafter, exemplary embodiments of the present disclosure will be described in detail with reference to the accompanying drawings to clearly describe the technical solution to the technical problem of the present disclosure. In this instance, in describing the present disclosure, where a certain description of relevant known technology makes the subject matter of the present disclosure ambiguous, its description may be omitted.

Additionally, the definition of the terms used herein takes into account the functions in the present disclosure and may be subject to change depending on the intention of designers or manufacturers or the convention. Therefore, the definition of the terms as described below should be given based on the description throughout the specification.

For reference, the components of the present disclosure in the accompanying drawings may be reduced, enlarged, omitted or schematically depicted in part or in whole for the purpose of easy technical understanding.

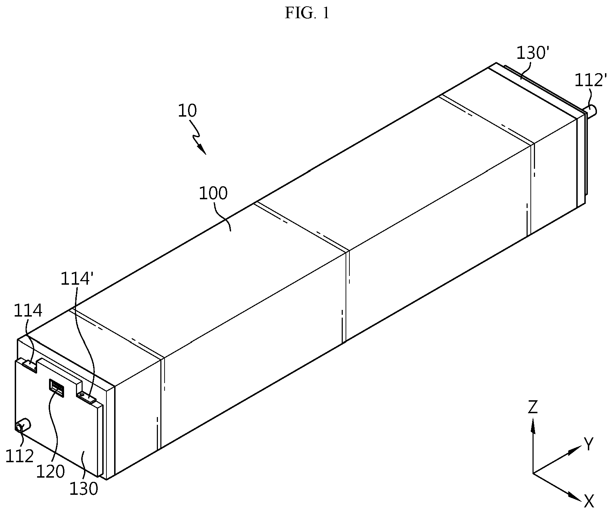

FIG. 1 is a perspective view of an immersion cooled battery module 10 according to an embodiment of the present disclosure.

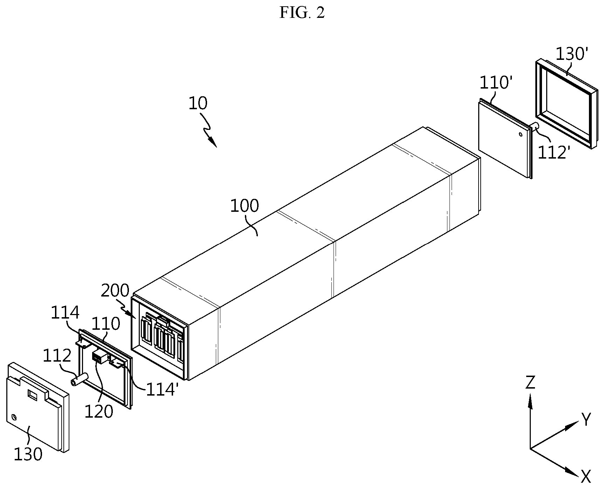

FIG. 2 is an exploded perspective view of the immersion cooled battery module 10 shown in FIG. 1.

As shown in FIGS. 1 and 2, the battery module 10 according to an embodiment of the present disclosure is configured to cool battery cells received in an internal space of a module case 100 by direct contact between the battery cells and a cooling liquid. To this end, the battery module 10 may include the module case 100, a battery assembly 200, sealing covers 110, 110', a waterproof connector 120 and end covers 130, 130'.

The module case 100 extends in a first direction (Y axis direction), has an opening in at least one of two ends in the first direction, and is configured to accommodate a plurality of sub battery modules and the cooling liquid in the internal space connected to the opening.

For example, the module case 100 may have the internal space extending in the first direction (Y axis direction) and the opening in communication with the internal space. In an embodiment, the module case 100 may have a tubular shape having each opening at each of the two ends in the first direction. The module case 100 may be made of a metal having a predetermined strength. Additionally, the module case 100 may be integrally formed via extrusion molding or metalworking to prevent leakage of the cooling liquid.

The battery assembly 200 may include a plurality of battery cells and be received in the internal space of the module case 100. As described below, the battery assembly 200 may include the plurality of sub battery modules each including a battery cell stack in which a plurality of battery cells are stacked, and a plurality of circuit boards corresponding to the plurality of sub battery modules. In this case, the plurality of circuit boards may be configured to sense electrical signals related to the plurality of sub battery modules.

The sealing covers 110, 110' may have at least one of an inlet 112 through which the cooling liquid is fed into the internal space of the module case 100, or an outlet 112' through which the cooling liquid fed into the internal space exits the module case 100, and be configured to cover the opening of the module case 100 to seal the module case 100.

The sealing covers 110, 110' may include the first sealing cover 110 having the inlet 112 and covering one end opening of the module case 100, and the second sealing cover 110' having the outlet 112' and covering the other end opening of the module case 100. In this case, the first sealing cover 110 may have High Voltage (HV) terminals 114, 114' that supplies the output of the battery module 10 and the waterproof connector 120.

The waterproof connector 120 may be coupled to and supported by the first sealing cover 110, electrically connected to the circuit boards of the battery assembly 200 and configured to transmit the electrical signals sensed by each circuit board to an external device outside of the module case 100.

The end covers 130, 130' may be configured to cover the sealing covers 110, 110' coupled to the openings of the module case 100. The end covers 130, 130' may include the first end cover 130 covering the first sealing cover 110 coupled to one end opening of the module case 100 and the second end cover 130' covering the second sealing cover 110' coupled to the other end opening of the module case 100.

The cooling liquid applied to the present disclosure may include an insulating oil or a dielectric liquid having high withstand voltage. For example, the cooling liquid may include at least one of trioctyl phosphate (TOP), tributyl phosphate (TOB), triphenyl phosphate, trimethyl phosphate or tripropyl phosphate.

In a variation, a modified sealing cover covering the opening of the module case accommodating the battery assembly to seal the module case may have both the inlet and the outlet. In this case, the module case may have an opening at only one end in the lengthwise direction to which the modified sealing cover is coupled, and the other end of the corresponding module case in the lengthwise direction may be closed. Accordingly, according to this variation, the components corresponding to the second sealing cover 110' and the second end cover 130' shown in FIGS. 1 and 2 may be omitted. In this case, the cooling liquid fed through the inlet of the modified sealing cover may cool the battery cells while circulating in the internal space of the module case, and then exit through the outlet of the modified sealing cover.

As described above, according to the present disclosure, since the battery cells received in the module case 100 of the battery module 10 may be cooled through the direct contact between the battery cells and the cooling liquid fed into the module case 100, it may be possible to eliminate the need for battery cell cooling means such as a thermal pad or a heat sink, improve the battery cell cooling performance and effectively prevent thermal runaway in the battery cell. Additionally, when a fire occurs due to thermal runaway in the battery cell, the cooling liquid filled in the module case may act as a fire extinguishing agent, so it may be possible to prevent thermal runaway propagation to other battery cell or other battery module adjacent to the battery cell in which the thermal runaway occurred.

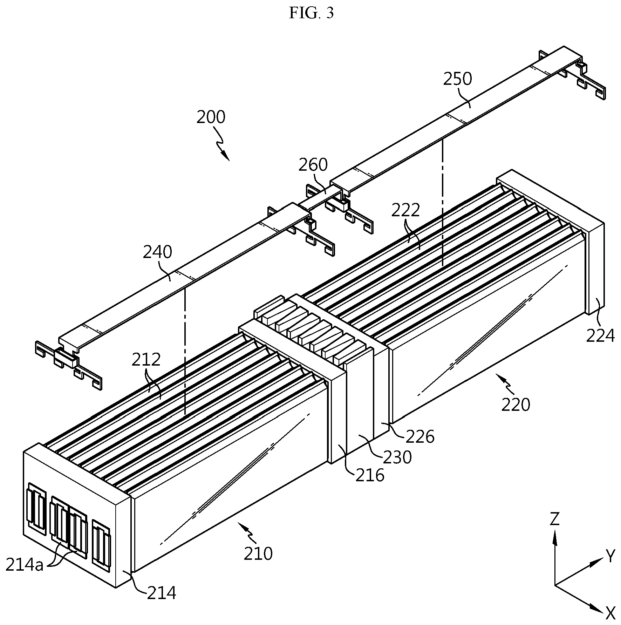

FIG. 3 is an exploded perspective view of the battery assembly 200 received in the module case of the immersion cooled battery module according to an embodiment of the present disclosure.

As shown in FIG. 3, the battery assembly 200 may include the plurality of sub battery modules 210, 220, an insulation block 230 and the plurality of circuit boards 240, 250.

Each of the plurality of sub battery modules 210, 220 may include the battery cell stack in which a plurality of battery cells 212, 222 are stacked, and be received in the internal space of the module case 100 and arranged in parallel along the lengthwise direction (Y axis direction) of the module case 100.

For example, the battery assembly 200 may include the first sub battery module 210 and the second sub battery module 220.

In this case, the first sub battery module 210 may include a first battery cell stack in which a plurality of battery cells 212 are stacked in the widthwise direction (X axis direction) of the module case 100, a first busbar frame 214 at one end of the first battery cell stack in the lengthwise direction (Y axis direction), and a second busbar frame 216 at the other end of the first battery cell stack in the lengthwise direction.

Additionally, the second sub battery module 220 may include a second battery cell stack in which a plurality of battery cells 222 are stacked in the widthwise direction (X axis direction) of the module case 100, a third busbar frame 224 at one end of the second battery cell stack in the lengthwise direction (Y axis direction), and a fourth busbar frame 226 at the other end of the second battery cell stack in the lengthwise direction.

The first to fourth busbar frames 214, 216, 224, 226 may be configured to support a busbar 214a electrically connecting an electrode lead of the battery cell to an electrode lead of other battery cell or a terminal.

Additionally, the battery cells that form the battery cell stack of each sub battery module 210, 220 may include pouch type battery cells in which an electrode assembly and an electrolyte are received in a pouch type case.

The insulation block 230 may be made of an insulating material and disposed between the first sub battery module 210 and the second sub battery module 220 adjacent to each other among the plurality of sub battery modules. Additionally, one end of the insulation block 230 may be in close contact with the first sub battery module 210, and the other end of the insulation block 230 may be in close contact with the second sub battery module 220.

As described above, since the insulation block 230 supports in close contact with the sub battery modules 210, 220 adjacent to each other, it may be possible to ensure electrical safety of the sub battery modules 210, 220 and prevent damage to the sub battery modules 210, 220 caused by physical impacts or vibration.

The plurality of circuit boards 240, 250 may include the number of circuit boards corresponding to the plurality of sub battery modules 210, 220, respectively. Additionally, the plurality of circuit boards 240, 250 may be received in the internal space of the module case 100 and configured to sense the electrical signals related to the plurality of sub battery modules 210, 220. The circuit boards may be disposed on top of the corresponding sub battery modules.

Each of the plurality of circuit boards 240, 250 may be a Flexible Printed Circuit Board (FPCB).

For example, the plurality of circuit boards 240, 250 may include the first circuit board 240 corresponding to the first sub battery module 210 and the second circuit board 250 corresponding to the second sub battery module 220.

The first circuit board 240 may be configured to sense a first electrical signal related to the first sub battery module 210 among the plurality of sub battery modules 210, 220. In this case, the first electrical signal may include an electrical signal indicating the output voltage, the output current or the state of charge of the battery cells included in the first sub battery module 210.

The second circuit board 250 may be configured to sense a second electrical signal related to the second sub battery module 220 among the plurality of sub battery modules 210, 220. In this case, the second electrical signal may include an electrical signal indicating the output voltage, the output current or the state of charge related to the battery cells included in the second sub battery module 220.

Additionally, the first circuit board 240 may be configured to receive the second electrical signal from the second circuit board 250, collect the first electrical signal and sensed by itself and the second electrical signal transmitted from the second circuit board 250, and transmit the same to the external device through the waterproof connector 120.

To this end, the battery assembly 200 may further include a Flat Flexible Cable (FFC) 260. The FFC 260 may be configured to electrically connect the first circuit board 240 to the second circuit board 250 to transmit the second electrical signal sensed by the second circuit board 250 to the first circuit board 240.

In general, the length of the battery module corresponds to the length of the battery cells that constitute the battery module. However, since the immersion cooled battery module 10 according to the present disclosure includes the plurality of sub battery modules 210, 220 arranged in parallel in the lengthwise direction (Y axis direction), the length may be at least double a typical battery module including battery cells having the same size as the present disclosure. For example, when the typical battery module is about 500 mm to 610 mm long, the immersion cooled battery module 10 according to the present disclosure may 1000 mm or more long.

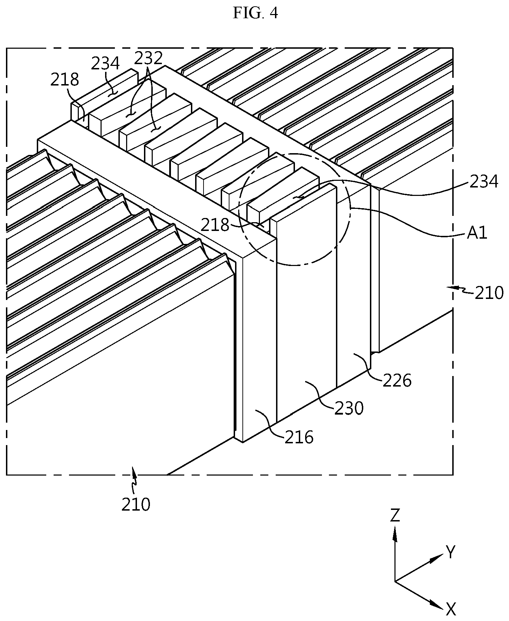

FIG. 4 is an enlarged view of the insulation block 230 of the battery assembly shown in FIG. 3.

As shown in FIG. 4, the insulation block 230 may be disposed between the first sub battery module 210 and the second sub battery module 220 adjacent to each other. One end of the insulation block 230 may be in close contact with the first sub battery module 210, and the other end of the insulation block 230 may be in close contact with the second sub battery module 220.

In an embodiment, the edge of the insulation block 230 may be in close contact with the inner surface of the module case 100. In this case, the insulation block 230 may have a communication groove 232.

The communication groove 232 may be disposed at the edge of the insulation block 230 in close contact with the inner surface of the module case 100 and configured to allow the cooling liquid to pass from the first sub battery module 210 to the second sub battery module 220. To this end, the communication groove 232 may extend from the first sub battery module 210 to the second sub battery module 220.

Additionally, the communication groove 232 may become narrower from the first sub battery module 210 to the second sub battery module 220 to increase the flow rate of the cooling liquid passing through the communication groove 232. As a result, it may be possible to prevent cooling performance degradation caused by the flow rate reduction of the cooling liquid during the movement of the cooling liquid fed into the module case 100 from the first sub battery module 210 to the second sub battery module 220.

In an embodiment, the battery assembly 200 may further include a connection member 218 electrically connecting the first sub battery module 210 to the second sub battery module 220. The connection member 218 may be made of a conductive material such as a metal.

In this case, the insulation block 230 may have a support groove 234 where at least a portion of the connection member 218 is inserted and supported.

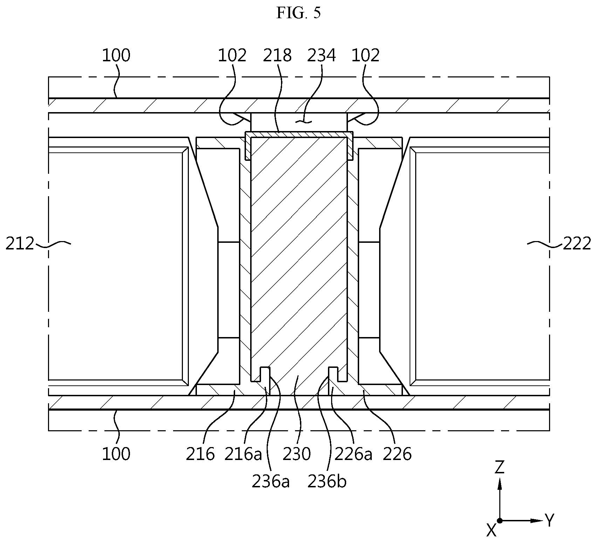

FIG. 5 is a vertical cross-sectional view of section A1 in FIG. 4.

As shown in FIG. 5, one end of the insulation block 230 may be in close contact with the second busbar frame 216 of the first sub battery module, and the other end of the insulation block 230 may be in close contact with the fourth busbar frame 226 of the second sub battery module.

The second busbar frame 216 may be configured to support the busbar or the terminal electrically connected to the battery cell 212 of the first sub battery module. The fourth busbar frame 226 may be configured to support the busbar or the terminal electrically connected to the battery cell 222 of the second sub battery module.

The connection member 218 may have one end connected to the busbar or the terminal disposed at the second busbar frame 216 and the other end extending along the support groove 234 of the insulation block 230 and connected to the busbar or the terminal disposed at the fourth busbar frame 226.

In an embodiment, the second busbar frame 216 in close contact with the insulation block 230 may have a first coupling protrusion 216a that is inserted and coupled to a first coupling groove 236a of the insulation block 230. In this case, the first coupling protrusion 216a may extend in the first direction (for example, Y axis direction) toward the insulation block 230 and bend in a second direction (for example, Z axis direction) perpendicular to the first direction. The first coupling groove 236a may have a shape that matches the first coupling protrusion 216a.

Additionally, the fourth busbar frame 226 in close contact with the insulation block 230 may have a second coupling protrusion 226a that is inserted and coupled to a second coupling groove 236b of the insulation block 230. In this case, the second coupling protrusion 226a may extend in a third direction toward the insulation block 230 and bend in a fourth direction (for example, Z axis direction) perpendicular to the third direction. The second coupling groove 236b may have a shape that matches the second coupling protrusion 226a.

Additionally, in an embodiment, the module case 100 may include a stopper 102 protruding from the inner surface that forms the internal space and configured to support the insulation block 230, thereby limiting the movement of the insulation block 230. In this case, the stopper 102 may come into close contact with two ends of the insulation block 230 to limit the movement of the insulation block 230 so as to prevent the insulation block 230 from moving out of position to the first sub battery module 210 or the second sub battery module 220.

As described above, since the insulation block 230 supports in close contact with the sub battery modules and the stopper 102 limits the movement of the insulation block 230, it may be possible to ensure electrical safety of the sub battery modules and prevent damage to the sub battery module caused by physical impacts or vibration.

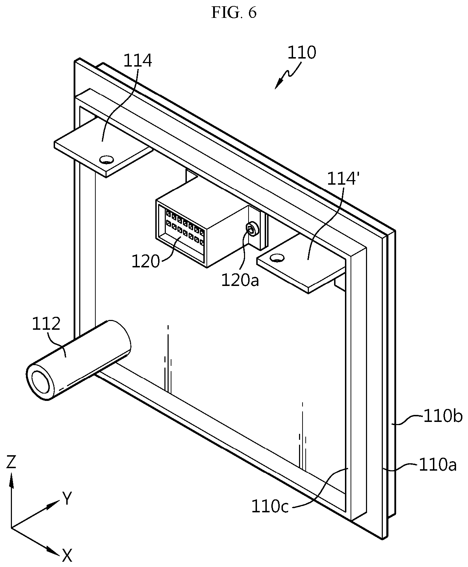

FIG. 6 is a perspective view of the first sealing cover 110 of the immersion cooled battery module according to an embodiment of the present disclosure.

As shown in FIG. 6, the first sealing cover 110 may have the inlet 112 through which the cooling liquid is fed into the internal space of the module case 100, and be configured to be inserted into the opening of the module case 100 to air-tightly cover the opening of the module case 100. To this end, the first sealing cover 110 may include a cover portion 110a, a fixing portion 110b and a wall portion 110c.

The cover portion 110a may have the edge that matches the opening of the module case 100 and be inserted into the opening of the module case 100.

The fixing portion 110b may protrude from a first surface of the cover portion 110a adjacent to the internal space of the module case 100 to the internal space, and its edge may be attached and fixed to the inner surface of the module case 100. To this end, a sealing tape with double-sided adhesion may be attached to the edge surface of the fixing portion 110b in contact with the inner surface of the module case 100.

The wall portion 110c may protrude from a second surface of the cover portion 110a opposite the first surface, and the wall portion 110c and the inner surface of the module case 100 that forms the periphery of the opening may be spaced a predetermined distance apart, facing each other. In this case, the wall portion 110c may have a loop shape along the edge of the cover portion 110a.

As described below, the wall portion 110c of the first sealing cover 110 may form a first insertion groove into which the inner edge of the end cover 130 as described below is inserted, together with the edge of the cover portion 110a and the inner surface of the module case 100 that forms the periphery of the opening.

Meanwhile, the second surface of the first sealing cover 110 may have High Voltage (HV) terminals 114, 114' that supply the output of the battery module 10 and the waterproof connector 120. In this case, the waterproof connector 120 may be fixed to the first sealing cover 110 by a fastening member 120a such as a bolt.

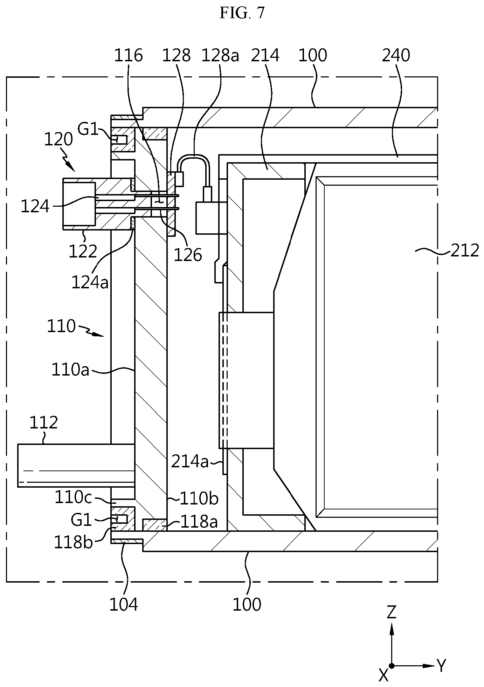

FIG. 7 is a vertical cross-sectional view of the first sealing cover 110 coupled to the module case 100.

As shown in FIG. 7, the first sealing cover 110 may have the inlet 112 through which the cooling liquid is fed into the internal space of the module case 100, and be inserted into one end opening of the module case 100 to air-tightly cover the opening.

To this end, the edge of the cover portion 110a of the first sealing cover 110 may have a shape that matches the opening of the module case 100.

The fixing portion 110b of the first sealing cover 110 protrudes from the first surface of the cover portion 110a to the internal space of the module case 100 and its edge is attached and fixed to the inner surface of the module case 100.

To this end, the sealing tape 118a with double-sided adhesion may be attached to the edge surface of the fixing portion 110b in contact with the inner surface of the module case 100. In this case, the sealing tape 118a may have a multilayer structure having an adhesive layer on each of two surfaces of a substrate layer made of a waterproofing material.

For example, the substrate layer of the sealing tape 118a may include at least one material layer made of at least one of polyimide, polyprophylene, polyethylene or polyethylene terephthalate. Additionally, the adhesive layer of the sealing tape 118a may include at least one of poly methyl methacrylate (PMMA), poly ethyl methacrylate (PEMA) or poly butyl methacrylate (PBMA). Additionally, the sealing tape 118a may further include a release paper covering the adhesive layer. The release paper may be removed by a worker immediately before attaching the sealing tape 118a.

The wall portion 110c may protrude from the second surface of the cover portion 110a opposite the first surface adjacent to the internal space of the module case 100 in a direction facing away from the internal space of the module case 100, and the wall portion 110c and the inner surface of the module case 100 that forms the periphery of the opening may be spaced the predetermined distance apart, facing each other. As mentioned above, the wall portion 110c may have a loop shape along the edge of the cover portion 110a.

The wall portion 110c of the first sealing cover 110 may form the first insertion groove G1 together with the edge of the cover portion 110a and the inner surface of the module case 100 that forms the periphery of the opening. Additionally, a liquid sealant 118b such as a sealing glue may be applied to the inner surface of the first insertion groove G1.

Additionally, a structural adhesive 104 having high shear strength may be applied to the outer surface of one end portion of the module case 100 at which the opening is located. The structural adhesive 104 may include a polymer alloy adhesive or a polyimide adhesive. As described below, the outer edge of the first end cover 130 as described below may be attached and fixed to the outer surface of the module case 100 coated with the structural adhesive 104.

Meanwhile, the first sealing cover 110 may have a through-hole 116 into which at least a portion of the waterproof connector 120 is inserted.

Additionally, the waterproof connector 120 may include a connector body 122, a contact pin 124 and a connection pin 126.

The connector body 122 may be coupled to the second surface of the first sealing cover 110 among the first surface of the first sealing cover 110 adjacent to the internal space of the module case 100 and the second surface opposite the first surface to cover the first opening of the through-hole 116 in the second surface. The connector body 122 of the waterproof connector 120 may be made of a polymer synthetic resin having insulating properties, and fixed to the first sealing cover 110 by the fastening member such as a bolt.

In an embodiment, the waterproof connector 120 may further include a sealing member 122a disposed between the connector body 122 and the second surface of the first sealing cover 110 to seal around the first opening of the through-hole 116. In this case, the sealing member 122a may include either a sealant or a gasket or both.

The contact pin 124 may be supported by the connector body 122 and extend in a direction facing away from the internal space of the module case 100. Additionally, the contact pin 124 may be electrically connected in contact with a mating contact pin of a mating connector (not shown) that is connected to the waterproof connector 120. To this end, the contact pin 124 may be made of a metal having conductive properties. The waterproof connector 120 may include at least one contact pin 124.

The connection pin 126 may be electrically connected to the contact pin 124, extend from the connector body 122 to the internal space of the module case 100 through the through-hole 116 and be electrically connected to the first circuit board 240 among the plurality of circuit boards 240, 250 received in the module case 100. To this end, the connection pin 126 may be made of a metal material having conductive properties. The waterproof connector 120 may include at least one connection pin 126.

In an embodiment, the contact pin 124 and the connection pin 126 may be integrally formed. Additionally, in an embodiment, the connector body 122 may be integrally formed with the contact pin 124 and the connection pin 126 via insert molding.

Meanwhile, the battery module 10 may further include a connection circuit board 128 and a cable 128a for the electrical connect between the waterproof connector 120 and the first circuit board 240.

In this case, the connection circuit board 128 may be coupled to the first surface of the first sealing cover 110 adjacent to the internal space of the module case 100 to cover the second opening of the through-hole 116 in the first surface, and electrically connected to the connection pin 126. To this end, the connection circuit board 128 may have a via hole into which the connection pin 126 is inserted. The connection pin 126 inserted into the via hole may be fixed to the connection circuit board 128 via soldering.

The cable 128a may have one end electrically connected to the connection circuit board 128 and the other end electrically connected to the first circuit board 240. The cable 128a may include a Flat Flexible Cable (FFC). As described above, the first circuit board 240 connected to the cable 128a may be electrically connected to the busbar 214a connected to the electrode lead of the battery cell 212. In this case, the busbar 214a may be coupled and fixed to the first busbar frame 214.

For reference, as described with reference to FIGS. 1 and 2, the second sealing cover 110' covering the other end opening of the module case 100 may have the outlet 112' through which the cooling liquid fed into the internal space of the module case 100 exits, and be inserted into the other end opening to air-tightly cover the other end opening. To this end, the second sealing cover 110' may include the components corresponding to the cover portion 110a, the fixing portion 110b and the wall portion 110c of the first sealing cover 110. In this instance, the second sealing cover 110' does not have the components corresponding to the HV terminals 114, 114' or the waterproof connector 120.

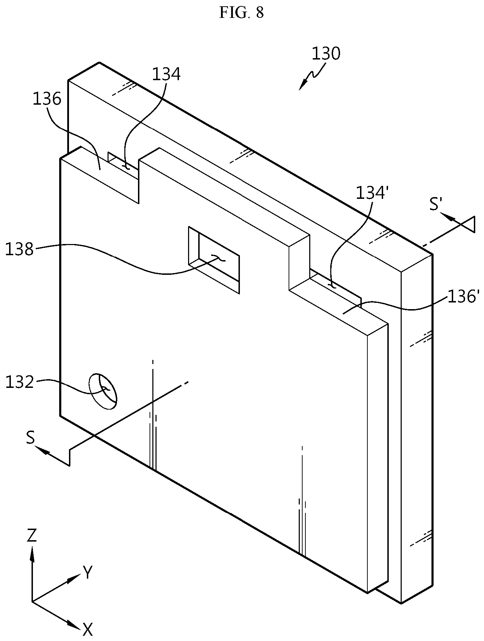

FIG. 8 is a perspective view of the first end cover 130 of the immersion cooled battery module according to an embodiment of the present disclosure.

As shown in FIG. 8, the first end cover 130 may be configured to cover the first sealing cover 110 coupled to one end opening of the module case 100. The first end cover 130 may have an inlet hole 132 through which the inlet 112 of the first sealing cover 110 passes, and a connector hole 138 where at least a portion of the waterproof connector 120 is inserted and exposed to the outside.

Additionally, the first end cover 130 may further have terminal holes 134, 134' through which the HV terminals 114, 114' of the first sealing cover 110 pass, and supports 136, 136' to support the ends of the HV terminals 114, 114' extending to the outside through the terminal holes 134, 134'.

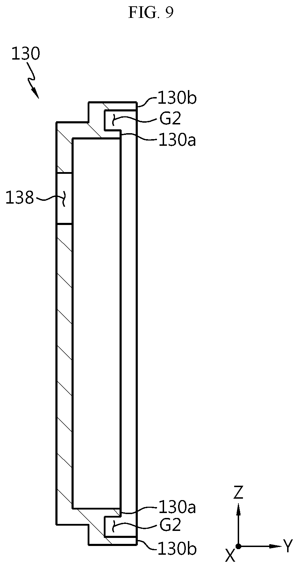

FIG. 9 is a vertical cross-sectional view of the first end cover 130 shown in FIG. 8, taken along the line S-S´.

As shown in FIG. 9, the first end cover 130 may have a cap structure that covers one end of the module case 100 to which the first sealing cover 110 is coupled. Additionally, the first end cover 130 may include an inner edge 130a and an outer edge 130b.

The inner edge 130a may extend to the internal space of the module case 100 and be inserted into the first insertion groove G1 formed by the wall portion 110c of the first sealing cover 110, the edge of the cover portion 110a and the inner surface of the module case 100.

The outer edge 130b may extend to the outer surface of the module case 100 and attach to the portion of the outer surface coated with the structural adhesive 104.

Additionally, the inner edge 130a and the outer edge 130b may be spaced apart from each other by a predetermined gap to form a second insertion groove G2 into which the open edge of the module case 100 is inserted.

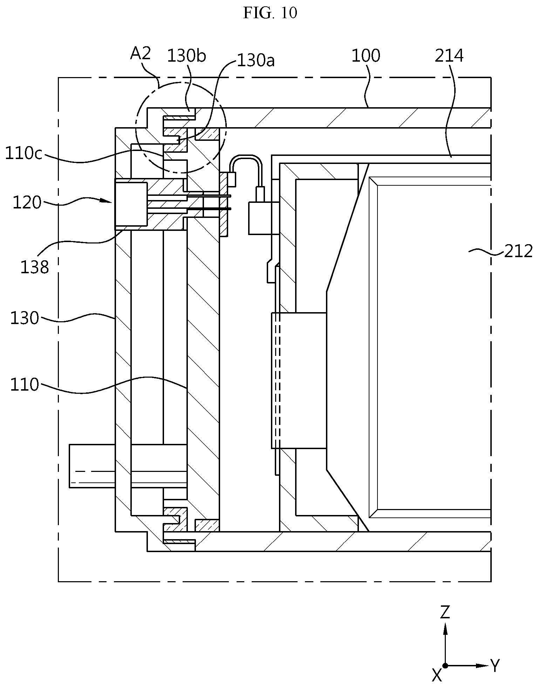

FIG. 10 is a vertical cross-sectional view of the first end cover 130 coupled to the module case 100.

As shown in FIG. 10, the inner edge 130a of the first end cover 130 may extend to the internal space of the module case 100 and be inserted into the first insertion groove between the wall portion 110c of the first sealing cover 110 and the open edge of the module case 100.

Additionally, the outer edge 130b of the first end cover 130 may extend to the outer surface of the module case 100 and attach to the portion of the outer surface coated with the structural adhesive 104.

Additionally, the open edge of the module case 100 may be inserted into the second insertion groove G2 between the inner edge 130a and the outer edge 130b of the first end cover 130.

Meanwhile, the tip of the waterproof connector 120 may be inserted and supported by the connector hole 138 of the first end cover 130.

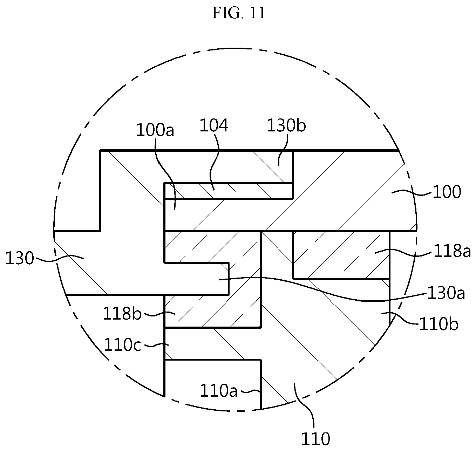

FIG. 11 is an enlarged view of section A2 in FIG. 10.

As shown in FIG. 11, the inner edge 130a of the first end cover 130 may extend to the internal space of the module case 100 and be inserted into the first insertion groove G1 between the wall portion 110c of the first sealing cover 110 and the open edge 100a of the module case 100. In this case, the liquid sealant 118b may be interposed between the inner edge 130a of the first end cover 130 inserted into the first insertion groove G1 and the inner surface of the first insertion groove G1.

Additionally, the outer edge 130b of the first end cover 130 may extend to the outer surface of the module case 100 and attach to the outer surface of the open edge 100a coated with the structural adhesive 104.

Meanwhile, the open edge 100a of the module case 100 may be inserted into the second insertion groove between the inner edge 130a and the outer edge 130b of the first end cover 130.

As described above, since the inner edge 130a of the first end cover 130 is inserted into the first insertion groove G1 between the wall portion 110c of the first sealing cover 110 and the open edge 100a of the module case 100, and the open edge 100a of the module case 100 is inserted into the second insertion groove G2 between the inner edge 130a and the outer edge 130b of the first end cover 130 to form a meander-shaped sealing structure, it may be possible to minimize the leakage risk of the cooling liquid fed into the battery module 10.

Additionally, the sealing tape 118a, the liquid sealant 118b and the structural adhesive 104 applied to the sealing structure of the battery module 10 may achieve triple prevention of cooling liquid leaks, thereby improving durability and safety of the immersion cooled battery module 10.

For reference, as described with reference to FIGS. 1 and 2, the second end cover 130' covering the other end opening of the module case 100 together with the second sealing cover 110' may have an outlet hole through which the outlet 112' of the second sealing cover 110' passes, and cover the other end opening to which the second sealing cover 110' is coupled. To this end, the second end cover 130' may include the components corresponding to the inner edge 130a and the outer edge 130b of the first end cover 130. In contrast, the second end cover 130' does not include the components corresponding to the terminal holes 134, 134' or the connector hole 138 of the first end cover 130.

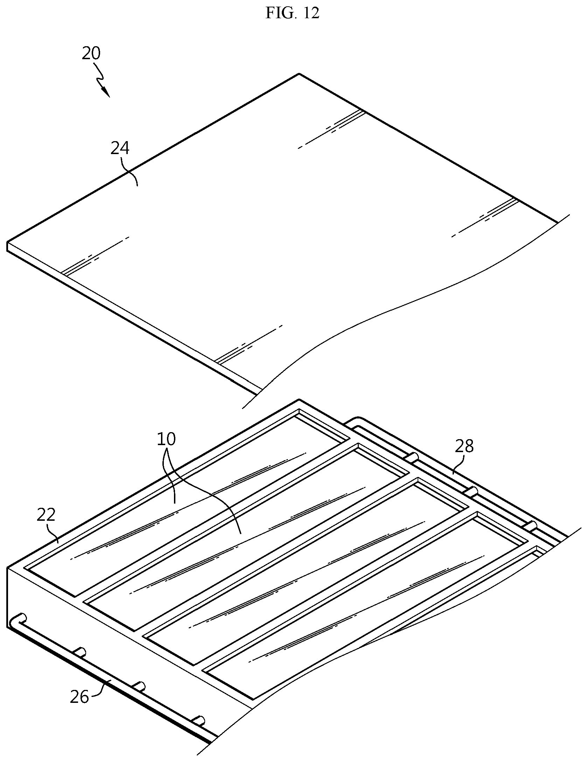

FIG. 12 is a diagram showing a battery pack 20 according to an embodiment of the present disclosure.

As shown in FIG. 12, the battery pack 20 according to an embodiment of the present disclosure may include the battery module 10 according to the present disclosure and pack cases 22, 24 accommodating at least one battery module 10. The pack cases 22, 24 may have a plurality of seating spaces in which the plurality of battery modules is received and seated.

Additionally, the battery pack 20 may further include a supply pipe 26 to supply the cooling liquid to the battery module 10 and a recovery pipe 28 to recover the cooling liquid from the battery module 10. Although not shown in FIG. 12, the battery pack 20 may further include a cooling liquid tank to store the cooling liquid, a pump to circulate the cooling liquid stored in the cooling liquid tank through the supply pipe 26 and the recovery pipe 28, and a chiller to remove heat from the cooling liquid recovered through the recovery pipe 28.

Additionally, the battery pack 20 may further include a variety of electrical components (not shown) to control the charge and discharge of the battery module 10 received in the pack cases 22, 24 or monitor State Of Charge (SOC), State Of Health (SOH) or the like. The electrical components may be received in the pack cases 22, 24 together with the battery module 10.

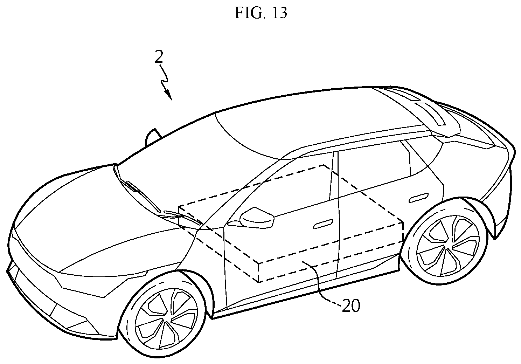

FIG. 13 is a diagram showing a vehicle 2 according to an embodiment of the present disclosure.

As shown in FIG. 13, the vehicle 2 according to an embodiment of the present disclosure may include at least one battery module 10 according to any one of the above-described embodiments or at least one battery pack 20 including the battery module 10.

As described above, the battery module 10 or the battery pack 20 applied to the vehicle 2 may supply electrical energy necessary for the operation of the vehicle 2.

For reference, the battery module according to the present disclosure may be applied to not only the vehicle but also Energy Storage Systems (ESS) or a variety of electric devices.

As described above, according to the present disclosure, since the battery cells received in the module case of the battery module are cooled through the direct contact between the battery cells and the cooling liquid fed into the module case, it may be possible to eliminate the need for battery cell cooling means such as a thermal pad or a heat sink, as well as improving the battery cell cooling performance and effectively preventing thermal runaway in the battery cell. Additionally, when a fire occurs due to thermal runaway in the battery cell, the cooling liquid filled in the module case may act as a fire extinguishing agent, so it may be possible to prevent thermal runaway propagation to other battery cell or other battery module near the battery cell in which the thermal runaway occurred.

Additionally, since the plurality of sub battery modules each including the battery cell stack in which a plurality of battery cells are stacked is received in the single module case to form a battery module, it may be possible to reduce the number of battery modules in the battery pack. As a result, in the battery pack including the plurality of battery modules, it may be possible to reduce the space occupied by the inlet and the outlet for each battery module and the space occupied by the pipes required to supply the cooling liquid to each battery module and recover the cooling liquid from each battery module, thereby reducing the manufacturing cost of the battery pack, reducing the total volume and weight of the battery pack and improving the energy density of the battery pack.

Additionally, since one of the plurality of circuit boards corresponding to the plurality of sub battery modules transmits the electrical signal sensed by itself and the electrical signal sensed by the remaining circuit board to the external device through one waterproof connector, it may be possible to make it easy to establish an electrical connection between the battery module and the external electrical device, simplify the wiring structure of the battery pack including the plurality of battery modules, and monitor the condition of the battery module for each sub battery module.

Additionally, since the waterproof connector is coupled to the sealing cover having the inlet or the outlet and is disposed in the space for connecting the inlet or the outlet to the pipe, it may be possible to eliminate the need for a space for performing the electrical connection operation of the waterproof connector in the battery pack, and make it easy to perform the electrical connection operation of the waterproof connector.

Additionally, since the insulation module disposed between the first sub battery module and the second sub battery module adjacent to each other among the plurality of sub battery modules supports in close contact with each of the first and second sub battery modules, it may be possible to ensure electrical safety of the sub battery modules and prevent damage to the sub battery module caused by physical impacts or vibration.

Additionally, the edge of the insulation block in close contact with the inner surface of the module case has the communication groove through which the cooling liquid passes, it may be possible to achieve the smooth flow of cooling liquid, thereby further improving the cooling performance of the battery module.

Additionally, since the inner edge of the first end cover is inserted into the first insertion groove between the wall portion of the first sealing cover and the open edge of the module case, and the open edge of the module case is inserted into the second insertion groove between the inner edge and the outer edge of the first end cover to form a meander-shaped sealing structure, it may be possible to minimize the leakage risk of the cooling liquid fed into the battery module.

Additionally, since the sealing tape, the liquid sealant and the structural adhesive applied to the sealing structure of the battery module achieves triple prevention of cooling liquid leaks, it may be possible to improve durability and safety of the immersion cooled battery module.

Further, it is obvious that the embodiments of the present disclosure will solve these and other technical problems in the corresponding technical field as well as the related technical field.

The present disclosure has been hereinabove described in detail with reference to the particular embodiments. However, those skilled in the art will clearly understand that a variety of modifications and changes may be made to the embodiments of the present disclosure in the technical scope of the present disclosure. Therefore, the disclosed embodiments should be construed in the descriptive sense, not in the limited sense. In other words, the scope of the true technical aspect of the present disclosure is set forth in the appended claims, and it should be interpreted that the present disclosure encompasses all differences in the equivalent scope.

Preferred examples of the invention are specified in the following Items:
Item 1. An immersion cooled battery module for cooling battery cells by direct contact between the battery cells and a cooling liquid, comprising:
   a plurality of sub battery modules, each sub battery module including a battery cell stack in which a plurality of battery cells are stacked;
   a module case having an opening in at least one end, and accommodating the plurality of sub battery modules and the cooling liquid in an internal space connected to the opening;
   a sealing cover air-tightly covering the opening;
   a plurality of circuit boards corresponding to the plurality of sub battery modules, received in the internal space and configured to sense electrical signals related to the plurality of sub battery modules; and
   a waterproof connector coupled to the sealing cover, and configured to transmit the electrical signals respectively sensed by the plurality of circuit boards to an external device outside of the module case.
Item 2. The immersion cooled battery module according to Item 1, wherein the plurality of circuit boards includes:
   a first circuit board configured to sense a first electrical signal related to a first sub battery module among the plurality of sub battery modules; and
   a second circuit board configured to sense a second electrical signal related to a second sub battery module among the plurality of sub battery modules, and
   wherein the first circuit board is configured to transmit the first electrical signal and the second electrical signal transmitted from the second circuit board to the external device through the waterproof connector.
Item 3. The immersion cooled battery module according to Item 2, further comprising:
   a Flat Flexible Cable (FFC) electrically connecting the first circuit board to the second circuit board to transmit the second electrical signal sensed by the second circuit board to the first circuit board.
Item 4. The immersion cooled battery module according to Item 1, wherein each of the plurality of circuit boards includes a Flexible Printed Circuit Board (FPCB).
Item 5. The immersion cooled battery module according to Item 1, wherein the sealing cover further has a through-hole into which at least a portion of the waterproof connector is inserted, and
   wherein the waterproof connector includes:
   a connector body coupled to a second surface of the sealing cover and covering a first opening of the through-hole formed in the second surface, wherein a first surface of the sealing cover is adjacent to the internal space and the second surface is disposed opposite the first surface;
   at least one contact pin supported by the connector body and extending in a direction facing away from the internal space of the module case; and
   at least one connection pin electrically connected to the at least one contact pin, extending from the connector body to the internal space through the through-hole, and electrically connected to a first circuit board among the plurality of circuit boards.
Item 6. The immersion cooled battery module according to Item 5, wherein the waterproof connector further includes a sealing member disposed between the connector body and the second surface of the sealing cover to seal around the first opening of the through-hole.
Item 7. The immersion cooled battery module according to Item 5, further comprising:
   a connection circuit board coupled to the first surface of the sealing cover to cover a second opening of the through-hole formed in the first surface, and electrically connected to the at least one connection pin; and
   a cable having an end electrically connected to the connection circuit board and an opposite end electrically connected to the first circuit board.
Item 8. The immersion cooled battery module according to Item 1, further comprising:
   an insulation block made of an insulating material, and disposed between a first sub battery module and a second sub battery module adjacent to each other among the plurality of sub battery modules.
Item 9. The immersion cooled battery module according to Item 8, wherein the insulation block has a communication groove at an edge of the insulation block in close contact with an inner surface of the module case, wherein the communication groove allows the cooling liquid to pass from the first sub battery module to the second sub battery module.
Item 10. The immersion cooled battery module according to Item 9, wherein the communication groove extends from the first sub battery module to the second sub battery module, and becomes narrower toward the second sub battery module to increase a flow rate of the cooling liquid passing through the communication groove.
Item 11. The immersion cooled battery module according to Item 8, further comprising:
   a connection member electrically connecting the first sub battery module to the second sub battery module,
   wherein the insulation block has a support groove where at least a portion of the connection member is inserted and supported.
Item 12. The immersion cooled battery module according to Item 1, wherein the cooling liquid includes an insulating oil or a dielectric liquid.
Item 13. A battery pack comprising the immersion cooled battery module according to any one of Items 1 to 12.
Item 14. A vehicle comprising the immersion cooled battery module according to any one of Items 1 to 12.

## Claims

1. An immersion-cooled battery module (10) for cooling battery cells received in an internal space of a module case (100) by direct contact between the battery cells and a cooling liquid comprising:
the module case (100),
a battery assembly (200),
a sealing cover (110),
a waterproof connector (120) and
an end cover (130),
covering the sealing cover (110)
wherein the module case (100) extends in a first direction, has an opening in at least one of two ends in the first direction, and is configured to accommodate a plurality of sub battery modules and the cooling liquid in the internal space connected to the opening,
wherein the sealing cover (110) is inserted into the opening of the module case (100) to air-tightly cover the opening of the module case (100), the sealing cover comprising a cover portion (110a), a fixing portion (110b) and a wall portion (110c),
wherein the wall portion (110c) of the first sealing cover (110) forms an insertion groove (G1) together with an edge of the cover portion (110a) and the inner surface of the module case (100) that forms the periphery of the opening, and
wherein a liquid sealant (118b) is applied to the inner surface of the insertion groove (G1).

2. The immersion-cooled battery module (10) according to claim 1,
wherein an inner edge (130a) of the end cover (130) extends to the internal space of the module case (100) and is inserted into the first insertion groove (G1) between the wall portion (110c) of the first sealing cover (110) and an open edge (100a) of the module case (100).

3. The immersion-cooled battery module (10) according to claim 2,
wherein the liquid sealant (118b) is interposed between the inner edge (130a) of the end cover (130) inserted into the first insertion groove (G1) and the inner surface of the first insertion groove (G1).

4. The immersion-cooled battery module (10) according to any one of claims 1-3,
wherein a structural adhesive (104) is applied to an outer surface of one end portion of the module case (100) at which the opening is located.

5. The immersion-cooled battery module (10) according to any one of claims 1-3,
wherein an outer edge (130b) of the end cover (130) extends to an outer surface of the module case (100) and is attached to a portion of the outer surface coated with a structural adhesive (104).

6. The immersion-cooled battery module (10) according to any one of claims 1-5,
wherein the fixing portion (110b) protrudes from a first surface of the cover portion (110a) adjacent to the internal space of the module case (100) to the internal space, and an edge of the fixing portion (110b) is attached and fixed to the inner surface of the module case (100).

7. The immersion-cooled battery module (10) according to claim 6,
wherein a sealing tape (118a) with double-sided adhesion is attached to the edge surface of the fixing portion (110b) in contact with the inner surface of the module case (100).

8. The immersion-cooled battery module (10) according to any one of claims 1-7,
wherein the end cover (130) includes an inner edge (130a) and an outer edge (130b), and wherein the inner edge (130a) and the outer edge (130b) are spaced apart from each other by a predetermined gap to form a second insertion groove (G2) into which an open edge (100a) of the module case (100) is inserted.

9. The immersion-cooled battery module (10) according to any one of claims 1-8,
wherein the battery assembly (200) includes a plurality of sub battery modules (210, 220) and an insulation block (230),
wherein each of the plurality of sub battery modules (210, 220) includes a battery cell stack in which a plurality of battery cells (212, 222) are stacked, and is received in the internal space of the module case (100) and arranged in parallel along a lengthwise direction (Y axis direction) of the module case (100).
wherein the insulation block (230) is made of an insulating material and is disposed between a first sub battery module (210) and a second sub battery module (220) adjacent to each other among the plurality of sub battery modules (210, 220).

10. The immersion-cooled battery module (10) according to claim 9,
wherein the insulation block (230) comprises a communication groove (232) be disposed at an edge of the insulation block (230) in close contact with an inner surface of the module case (100) and configured to allow the cooling liquid to pass from the first sub battery module (210) to the second sub battery module (220).

11. The immersion-cooled battery module (10) according to any one of claims 9-10, wherein one end of the insulation block (230) is in close contact with the first sub battery module (210), and the other end of the insulation block (230) is in close contact with the second sub battery module (220).

12. The immersion-cooled battery module (10) according to any one of claims 9-11, wherein the module case (100) includes a stopper (102) protruding from the inner surface that forms the internal space of the module case (100), and
wherein the stopper (102) is configured to support the insulation block (230), thereby limiting movement of the insulation block (230).

13. The immersion-cooled battery module (10) according to any one of claims 1-12, wherein the cooling liquid includes an insulating oil or a dielectric liquid.

14. A battery pack (20) comprising the immersion-cooled battery module (10) according to any one of claims 1-13.

15. A vehicle (2) comprising the immersion-cooled battery module (10) according to any one of claims 1-13.
